# EUROPEAN PATENT SPECIFICATION

(11) **EP 3 967 825 B1**
(45) Date of publication and mention of the grant of the patent: **09.07.2025**
(21) Application number: 21196245.1
(22) Date of filing: 13.09.2021
(51) Int. Cl.: E04D 13/10, E04D 13/12, H02S 20/20, E06C 1/34, E04G 21/32, E04G 3/26

(54) **FASTENING ARRANGEMENT FOR FASTENING ROOF EQUIPMENT TO A ROOF**
BEFESTIGUNGSANORDNUNG ZUR BEFESTIGUNG VON DACHAUSRÜSTUNGEN AN EINEM DACH
AGENCEMENT DE FIXATION POUR FIXER UN ÉQUIPEMENT DE TOIT SUR UN TOIT

(30) Priority: 14.09.2020 SE 2051071
(43) Date of publication of application: 16.03.2022
(73) Proprietor: CWL Patent AB, 792 22 Mora (SE)
(72) Inventor: Granström, Linus, 792 32 Mora (SE)
(74) Representative: Ehrner & Delmar Patentbyrå AB

(56) References cited:
- EP-A1- 1 717 384
- EP-A1- 2 770 133
- DE-U1- 202015 105 982
- DE-U1- 29 516 463
- SE-C2- 539 791
- US-A1- 2018 347 602

## Description

### Technical Field

The invention relates to a fastening arrangement for fastening roof equipment to a roof.

### Background

Different fastening arrangements for fastening or attaching roof equipment to a roof are provided on the market. Such fastening arrangements may comprise one or more brackets for engagement with the roof equipment and one or more fastening means or fastening devices for fastening the bracket to a roof. Examples of roof equipment are ladders, snow fences, safety equipment and solar panels.

EP 1 717 384 A1 shows a fastening arrangement for roof equipment. EP 2 770 133 A1 shows a roof bracket. DE 20 2015 105982 U1 shows a bracket for a stairway. DE 295 16 463 U1 shows a roof bracket. SE 539 791 C2 shows a bracket for roof equipment. US 2018/347602 A1 shows a conduit mounting assembly.

### Summary

An objective of embodiments of the invention is to provide a solution which mitigates or solves the drawbacks and problems of conventional solutions.

A further objective of embodiments of the invention is to provide a solution which makes mounting of roof equipment to a roof easier than conventional solutions.

The above and further objectives are solved by the subject matter of the independent claim 1.

Further advantageous embodiments of the invention can be found in the dependent claims.

According to a first aspect of the invention, the above mentioned and other objectives are achieved with a fastening arrangement for fastening roof equipment to a roof, the fastening arrangement comprising:
a bracket comprising at least one engagement means for engagement with a roof equipment;
a first fastening portion comprising at least one first fastening means for fastening the fastening arrangement to a first roof structure of a roof;
a second fastening portion comprising at least one second fastening means for fastening the fastening arrangement to a second roof structure of the roof;
attachment means for attaching the first fastening portion to the bracket and/or to the second fastening portion; and
supporting means for supporting at least one section of a first tile in operation; and wherein the first fastening portion and the second fastening portion have elongated band shapes, each elongated band, except for their respective first and second fastening means, is extending outwards from a plane of the roof perpendicular to the plane of the roof so as to be narrow in the plane of the roof, such that the first fastening portion and the second fastening portion are arranged in a raised position along the plane of the roof in operation.

Thereby, the fastening arrangement can be made narrow make mounting easier such as for roofs with specific types of roof tiles.

A roof structure herein may have any of a first side facing a roof ridge, a second side facing outwards from a plane of a roof, and a third side facing a roof eave or a roof projection. The first and second sides of the roof structure may face opposite directions. The roof structures may have elongated shape/form.

The expression "in operation" herein may be understood as how different parts are arranged and/or located in relation to each other and/or to different parts of a roof, such as roof structure and tiles, when mounted in use.

In an embodiment of a fastening arrangement according to the first aspect, the attachment means comprises attachment means for attaching the bracket in an angle to a plane of the roof.

The angle may be 90 degrees and hence perpendicular to the plane of the roof but is not limited thereto. The angle may be larger than 0 degrees and smaller than 180 degrees in relation to the plane of the roof which also may be denoted the surface of the roof.

In an embodiment of a fastening arrangement according to the first aspect, the bracket is configured to extend outwards in an angle to a plane of the roof in operation.

The angle may be 90 degrees and hence perpendicular to the plane of the roof but is not limited thereto. The angle is however larger than 0 degrees and smaller than 180 degrees in relation to the plane of the roof which sometimes also may be denoted the surface plane of the roof.

An advantage of the fastening arrangement according to the first aspect is that roof tiles are securely attached at the roof since they are supported by the supporting means. Furthermore, mounting of roof equipment to a roof is easier than with conventional solutions.

In an embodiment of a fastening arrangement according to the first aspect, the supporting means is configured to enclose and support a lower end of the first tile in operation.

The lower end of a tile in operation may be considered as the end of the tile that is farthest from a ridge of the roof.

In an embodiment of a fastening arrangement according to the first aspect, the supporting means is arranged between the bracket and the second fastening portion.

In an embodiment of a fastening arrangement according to the first aspect, the supporting means is a U-shaped portion of the fastening arrangement extending around and enclosing the lower end of the first tile in operation.

The U-shaped portion may be arranged between the bracket and the second fastening portion.

Thereby, an even more secure and robust fastening of roof equipment is provided. Further, the first tile will also be more securely arranged at the roof structure.

In an embodiment of a fastening arrangement according to the first aspect, the fastening arrangement further comprises at least one first adjustment means for adjusting a length of the supporting means thereby adjusting the length of the section enclosed and supported by the supporting means.

Thereby, adapting the fastening arrangement to different types of tiles is simplified. Further, different supporting levels are possible.

In an embodiment of a fastening arrangement according to the first aspect,
the first fastening portion extends at least partially over the first tile in operation, and
the second fastening portion extends at least partially under the first tile in operation.

In an embodiment of a fastening arrangement according to the first aspect, the fastening arrangement further comprises at least one second adjustment means for adjusting a length of the fastening arrangement.

An advantage with this embodiment is that the length of the fastening arrangement can be adjusted or varied. Thereby, the fastening arrangement can be fastened to different types of roof structures or to roof structures with different dimensions or centre distances between the construction parts. For example, the distance between battens of a roof may vary in different roof structures. Therefore, the same fastening arrangement can be used for different roof structures. Further, mounting of the fastening arrangement to roof structure and hence the roof equipment is also made easier since the length of the fastening arrangement can be adjusted to a specific roof structure design. Moreover, in some embodiments by changing the length of the fastening arrangement the length of the supporting means is also changed thereby making adaptation to different types of tiles easier.

In an embodiment of a fastening arrangement according to the first aspect, the second adjustment means comprises adjustment means for adjusting the length of the fastening arrangement along a direction perpendicular to an extension of the first roof structure and an extension of the second roof structure.

This case may for example be applicable when a roof structure is a batten. The mentioned direction may also be parallel to the plane of the roof.

In an embodiment of a fastening arrangement according to the first aspect, the attachment means and the second adjustment means are co-located.

In an embodiment of a fastening arrangement according to the first aspect, the attachment means and the second adjustment means are co-located at the back of the first fastening portion.

The back of the first fastening portion may be considered as the section of the first fastening portion arranged closest to the second fastening portion and/or the bracket.

In an embodiment of a fastening arrangement according to the first aspect, the attachment means and the second adjustment means together form a combined attachment and adjustment means.

Thereby, a compact solution is provided.

In an embodiment of a fastening arrangement according to the first aspect, the bracket and the second fastening portion are formed from a common structure.

In an embodiment of a fastening arrangement according to the first aspect, the second fastening portion comprises a supporting portion configured to support the fastening arrangement on a third roof structure of the roof in operation.

Thereby, an even more secure and stable solution is provided for fastening roof equipment at the roof.

In an embodiment of a fastening arrangement according to the first aspect,
the first fastening portion extends between a side of a second tile and a side of a third tile in operation, and
the second fastening portion extends between a side of a fourth tile and a side of a fifth tile in operation.

In an embodiment of a fastening arrangement according to the first aspect, the bracket comprises at least one deformation portion configured to deform at a deformation level when receiving excessive loads.

The deformation level may correspond to a load level or an excess load level applied on the bracket.

Thereby, different safety systems may be used with the present fastening arrangement for improved safety.

In an embodiment of a fastening arrangement according to the first aspect, the deformation portion is arranged at the bracket adjacent to the first fastening portion.

This can also be understood that the deformation portion is arranged on a section of the bracket facing and/or being closest to the ridge of the roof.

Thereby, safety systems for fall protection can advantageously be coupled to the present fastening arrangement.

In an embodiment of a fastening arrangement according to the first aspect,
the first fastening means comprises a first portion for fixative means for fastening the fastening arrangement to the first roof structure, and/or
the second fastening means comprises a second portion for fixative means for fastening the fastening arrangement to the second roof structure.

Thereby, a secure and robust fastening of the fastening arrangement to the roof structures of the roof is provided.

In an embodiment of a fastening arrangement according to the first aspect,
the first fastening means comprises a first hook portion arranged on the tip of the first fastening portion for hooking onto the first roof structure, and/or
the second fastening means comprises a second hook portion arranged on the tip of the second fastening portion for hooking onto the second roof structure.

Thereby, even more secure and robust fastening to the roof structures of the roof is provided.

In an embodiment of a fastening arrangement according to the first aspect,
the first portion and the second portion substantially extend in a plane parallel to a plane of the roof, and
the first hook portion and the second hook portion extend in a plane perpendicular to the plane of the roof.

Thereby, even more secure and robust fastening to the roof structures of the roof is provided.

In an embodiment of a fastening arrangement according to the first aspect,
the first fastening portion has a first length extending in a plane parallel to a plane of the roof and a first band width extending outwards from the roof; and/or
the second fastening portion has a second length extending in a plane parallel to a plane of the roof and a second band width extending outwards from the roof.

Thereby, the fastening portions can extend between roof tiles in operation making mounting easier but also avoiding roof tiles to have a raised position when being arranged on the roof structure/roof.

In an embodiment of a fastening arrangement according to the first aspect, the first roof structure, the second roof structure and the third roof structure are arranged in parallel to each other in a plane of the roof and in a descending order along the slope of the roof.

In an embodiment of a fastening arrangement according to the first aspect, the first roof structure is a first batten, the second roof structure is a second batten, the third roof structure is a third batten.

Hence, the first roof structure is arranged above the second roof structure seen along the slope of the roof and the second roof structure is arranged above the third roof structure seen along the slope of the roof. This may also be understood as that the first roof structure is arranged closer to the ridge of the roof than the second roof structure which in turn is arranged closer to the ridge of the roof than the third roof structure.

According to a second aspect of the invention, the above mentioned and other objectives are achieved with a system comprising
at least one fastening arrangement according to any one of the claims; and
at least one roof equipment.

According to a third aspect which is not comprised in the claimed invention, the above mentioned and other objectives are achieved with a method for mounting a fastening arrangement at a roof, the method comprising:
fastening a second fastening portion to a second roof structure of a roof;
placing a first tile over the second fastening portion so that the second fastening portion extends below the first tile and wherein at least one section of the first tile is enclosed and supported by supporting means of the fastening arrangement;
fastening a first fastening portion to a first roof structure of the roof so that the first fastening portion extends over the first tile; and
attaching a bracket to the first fastening portion, wherein the bracket comprises at least one engagement means for engagement with a roof equipment.

Further applications and advantages of the embodiments of the invention will be apparent from the following detailed description.

### Brief Description of the Drawings

The appended drawings are intended to clarify and explain different embodiments of the invention, in which:
- Fig. 1 shows a fastening arrangement in a side view according to an embodiment of the invention;
- Fig. 2 shows the fastening arrangement in Fig. 1 in a perspective view;
- Fig. 3 shows the fastening arrangement in Fig. 1 in a perspective view from above;
- Fig. 4 shows the fastening arrangement in Fig. 1 in a perspective view from below;
- Fig. 5 shows a second fastening portion and a bracket formed in a common structure in a side view according to an embodiment of the invention;
- Fig. 6 shows the second fastening portion and the bracket in Fig. 5 in a perspective view;
- Fig. 7 shows an example of first adjustment means for adjusting the length of the supporting means;
- Fig. 8 shows a fastening arrangement according to a further embodiment of the invention;
- Fig. 9 shows the second fastening portion and the bracket in Fig. 8 in a perspective view;
- Figs. 10a - 10c illustrate a method according to an embodiment
- Figs. 11 - 13 show systems according to embodiments of the invention;
- Fig. 14 shows a flow chart of a method according to an embodiment and
- Fig. 15 illustrates a house with a roof having a roof structure comprising battens arranged in parallel to each other.

### Detailed Description

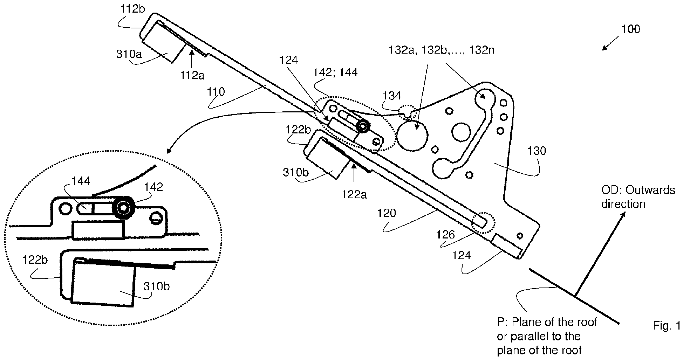

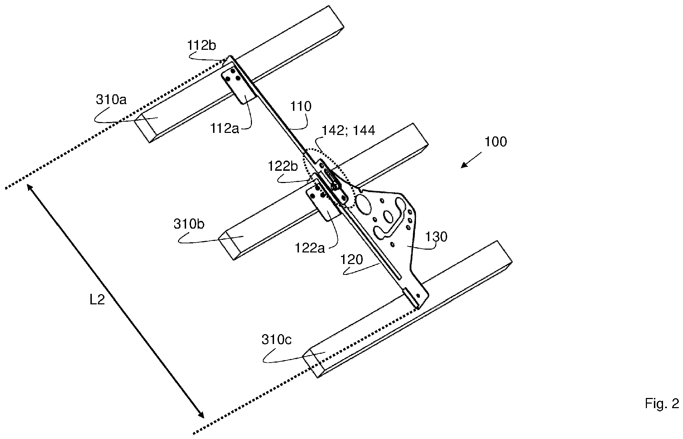

Fig. 1 shows a fastening arrangement 100 according to embodiments of the invention and Figs. 2 - 4 show the fastening arrangement in Fig. 1 in different perspective views. The herein disclosed fastening arrangement 100 for fastening roof equipment 200 to a roof 300 comprises a bracket 130 comprising at least one engagement means 132a, 132b,..., 132n for engagement with a roof equipment 200. The fastening arrangement 100 further comprises a first fastening portion 110 comprising at least one first fastening means 112 for fastening the fastening arrangement 100 to a first roof structure 310a of a roof 300. The fastening arrangement 100 further comprises a second fastening portion 120 comprising at least one second fastening means 122 for fastening the fastening arrangement 100 to a second roof structure 310b of the roof 300. The fastening arrangement 100 further comprises attachment means 142 for attaching the first fastening portion 110 to the bracket 130 and/or to the second fastening portion 120. The fastening arrangement 100 further comprises supporting means 150 for supporting at least one section of a first tile 320a in operation.

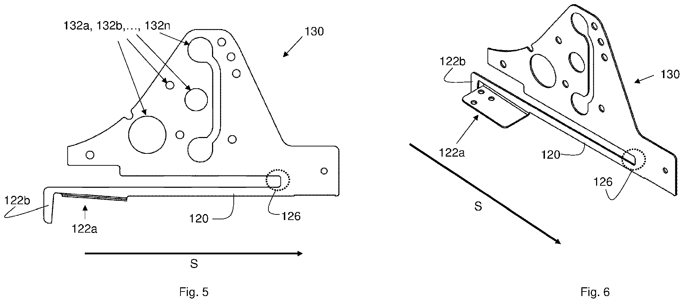

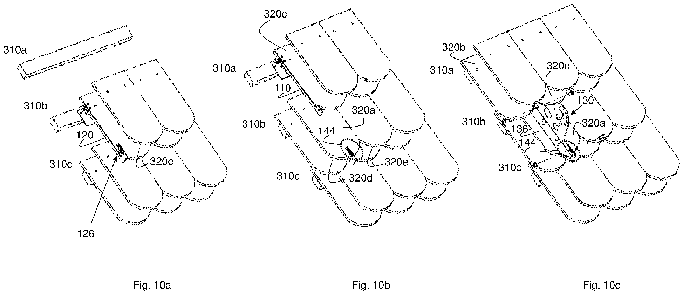

The supporting means 150 may be configured to enclose and support a lower end of the first tile 320a in operation, see also Figs. 10a - 10c. This may e.g. be achieved when the supporting means 150 is a U-shaped portion 126 of the fastening arrangement 100 extending around and enclosing the lower end of the first tile 320a in operation. The supporting means 150, such as the U-shaped portion, can be formed or arranged between the second fastening portion 120 and the bracket 130 as shown in the Figs. This may be suitable when the bracket 130 and the second fastening portion 120 are formed from a common structure and the first fastening portion 110 is attached to the common structure by means of attachment means. Such a common structure is shown more in detail in Fig. 5 and 6. The common structure may imply that the bracket 130 and the second fastening portion 120 are formed from a single piece of material, such as sheet metal punched and bended in a suitable way.

It is further noted that the bracket 130 herein comprises multiple different types of engagement means 132a, 132b,..., 132n for engagement with different roof equipment. As disclosed non-limiting examples of engagement means 132a, 132b,..., 132n are circular through holes in different sizes, elongated slots and slits that may or may not be combined with circular holes. Other non-limiting examples of engagement means 132a, 132b,..., 132n may be different types of couplings and connections such as screw connections and bolt connections. Further non-limiting examples are protrusions or other protruding portions for engagement with the roof equipment.

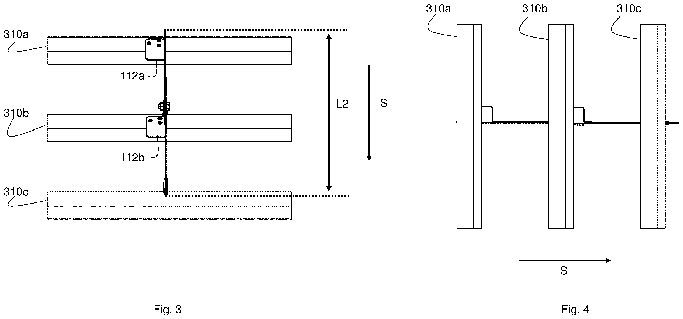

In embodiments of the invention, the fastening arrangement 100 comprises at least one second adjustment means 144 for adjusting a length L2 of the fastening arrangement 100. The second adjustment means 144 may comprise adjustment means for adjusting the length L2 of the fastening arrangement 100 along a direction perpendicular to an extension of the first roof structure 310a and an extension of the second roof structure 310b as shown in Fig. 2 and 3. This embodiment is suitable for roof structures comprising battens arranged in parallel to each other which may imply that the length L2 is adjusted in parallel to the plane of the roof 300.

As also noted from Fig. 1, the attachment means 142 and the second adjustment means 144 may be co-located e.g. at the section of the first fasting portion 110 being located closest to the bracket 130 and/or the second fastening portion 120. This also means that the attachment means 142 and the second adjustment means 144 together may form a combined attachment and adjustment means for a compact solution.

Moreover, each attachment means 142 and each second adjustment means 144 may comprise one or more attachment means and one or more adjustment means, respectively.

As shown in the enlarged detailed view in Fig. 1, the second adjustment means 144 may e.g. be an elongated slot extending along a length extension of the fastening arrangement 100 in parallel to the plane of the roof 300 and in which an attachment means 142, in this case a bolt connection/coupling, can be locked in different continuous or discrete positions in the slot. Hence, the adjustment means can be configured to change the length L1 of the whole fastening arrangement 100 by taking are being arranged at different continuous or discrete positions along the length extension of the fastening arrangement 100. Thereby, the total length L2 of the fastening arrangement 100 can be varied and adapted to different roof structures and different types of tiles having different dimensions and shapes. This implies that the fastening arrangement 100 can be applied on different roof constructions in which the distance between the first and second roof structures is different. For example, roof structures comprising battens arranged in a parallel pattern, the distance such as centre distance between the battens may vary.

In further embodiments of the invention, the attachment means 142 comprises attachment means for attaching the bracket 130 to the first fastening portion 110 and/or to the second fastening portion 120 in an angle to a plane P of the roof 300. The angle shown in the Figs. is substantially 90 degrees which means that the bracket 130 is attached to the first fastening portion 110 and/or to the second fastening portion 120 in a plane perpendicular to the plane of the roof 300. Mentioned plane perpendicular to the plane of the roof 300 may be considered as a vertical plane extending in an outwards direction OD from the surface of the roof and the plane of the roof 300 may be denoted as a pitched roof area having a pitch or a slope having a pitch direction or a slope direction from the ridge of the roof to the eaves or roof projection. The slope direction is illustrated with an arrow S as shown in the Figs. Thereby, the bracket 130 may be configured to extend outwards in an angle to the plane of the roof 300 in operation.

As previously mentioned, the fastening arrangement 100 comprises fastening means for fastening the fastening arrangement 100 to a roof structure. In embodiments of the invention as disclosed, the first fastening means 112 comprises a first portion 112a for fixative means for fastening the fastening arrangement 100 to the first roof structure 310a and/or the second fastening means 122 comprises a second portion 122a for fixative means for fastening the fastening arrangement 100 to the second roof structure 310b. In the examples shown such first and second portions 112a, 122a may have the shape of a plate extending from one side of the elongated fastening portion and configured to lay on a side of a batten facing outwards from the surface of the roof and comprising one or more receiving means e.g. in the form of through holes. Non-limiting examples of fixative means are screws and nails which are used for fastening the fastening arrangements 100 to the battens.

For even more secure and robust fastening, the first fastening means 112 may also comprises a first hook portion 112b arranged on the tip of the first fastening portion 110 for hooking onto the first roof structure 310a. Correspondingly, the second fastening means 122 may be or also comprise a second hook portion 122b arranged on the tip of the second fastening portion 120 for hooking onto the second roof structure 310b. These hook portions may be configured to hook around the side of the batten facing the ridge 330 of the roof 300. Therefore, also the tip of the first and second fastening portions 110, 120 is arranged at the part closest to the ridge 330.

In embodiments of the invention, the first portion 112a and the second portion 122a extend in a plane parallel to a plane of the roof 300, and the first hook portion 112b and the second hook portion 122b extend in a plane perpendicular to the plane of the roof 300 as shown in Fig. 1 and 2. Hence, they are perpendicularly arranged in relation to each other. In the disclosed example, the hook portion is arranged around a side of a batten facing the ridge 330 whilst the first portion 112a is located on a side of the batten facing outwards from the surface of the roof 300. This solution provides an even more robust and secure anchoring of the fastening arrangement 100 to the roof structure.

Furthermore, in embodiments of the invention the second fastening portion 120 comprises a supporting portion 124 configured to support the fastening arrangement 100 on a third roof structure 310c of the roof 300 in operation. The supporting portion 124 may be arranged in the part of the second fastening portion 120 closest to the eaves or roof projection in operation. The supporting portion 124 in contact with the third roof structure 310c may be covered with rubber or any other suitable material. Thus, mechanical damage on the tile is reduced and also undesired noise generated by the mechanical contact between the supporting portion 124 and the tile can be reduced. The combination of one or more of the first and second fastening means and the supporting portion 124 a very robust and secure anchoring of the fastening arrangement 100, and hence the roof equipment 200, to the roof structure of the roof 300 is achieved. It its further noted that also the first fastening portion 110 may comprise a corresponding supporting portion 124 for supporting the first fastening portion 110 on the second roof structure 310b as shown in Fig. 1.

Yet another advantage with such a secure anchoring of the roof equipment is provided for the embodiments of the invention when the bracket 130 comprises at least one deformation portion 134 configured to deform at a deformation level when receiving excessive loads. Since the fastening arrangement is securely fastened to the roof structure there is no risk that the roof equipment will detach or disconnect from the roof 300, hence a very secure anchoring is provided. Therefore, with the combination of very secure fastening and deformation portion(s) robust and safe safety applications can be designed. For example, the deformation portion(s) may be designed for different load levels and hence for different safety applications with different load level requirements for deformation. Such different load levels may e.g. be designed based on the number of deformation portions arranged on the bracket, the size and location of each deformation portion, the thickness of the bracket 130, and so on.

Generally, the deformation portion 134 of the bracket 130 may be designed to deform when being impacted by excessive load levels corresponding to threshold levels. Such load threshold levels may conform to regulatory requirements e.g. stipulated by government authorities and/or to standard requirements in the industry. Different designs of deformation portions are possible. A non-limiting example is the disclosed deformation portion 134 which is a cut out having an open portion facing the roof ridge in operation. The deformation portion 134 allows deformation and tearing apart at loads exceeding predetermined threshold values e.g. for the purpose of preventing inelastic pull from a falling person having a life-line fastened in a roof equipment such as a rack pipe or a holding profile.

In further embodiments of the invention, the deformation portion 134 is arranged adjacent to the first fastening portion 110 as shown in Fig. 1. In other words the deformation portion 134 is arranged in the portion of the bracket 130 facing or being closest to the ridge of the roof 300 in operation. This is suitable for safety equipment for fall accidents since the force of gravity is generally the acting force in such cases.

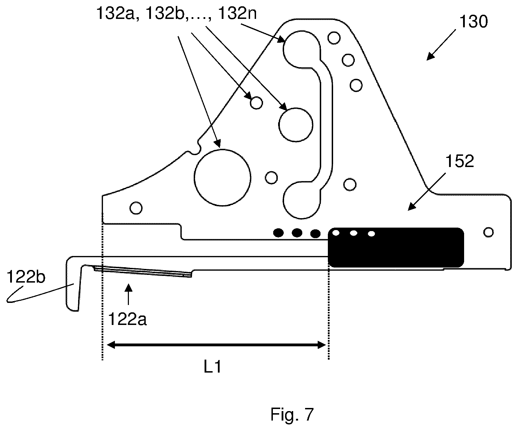

Fig. 7 shows a fastening arrangement 100 comprising least one first adjustment means 152 for adjusting a length L1 of the supporting means 150 thereby adjusting the length of the section enclosed and supported by the supporting means 150. Different solutions for the first adjustment means 152 are possible and in the non-limiting disclosed example, the first adjustment means 152 is made of a plate or a piece that limits the enclosing and supporting space. The plate can be arranged in different position such that the length L1 of the supporting means 150 is varied. In this respect the plate and the bracket 130 and/or the second fastening portion 120 may have corresponding engagement means and/or attachment means illustrated as black and white circles in Fig. 7.

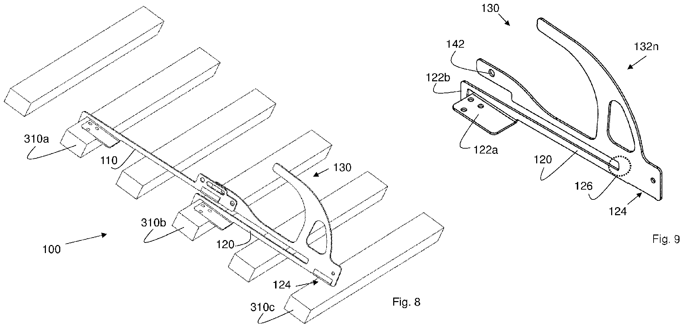

Fig. 8 and 9 show further bracket 130 design according to further embodiments of the invention. The bracket 130 therein shown comprises further types of engagement means 132n in the form of hooks for engagement with roof equipment 200 and in this particular case for engaging with a roof ladder or stair. It is further noted from Fig. 8 that the first 310a and second roof 310b structures to which the first 110 and second 120 fastening portions are fastened do not have to be adjacent roof structures, such as adjacent battens. Fig. 8 shows the example of every other batten. Certainly, it could be every third or every fourth batten, etc. Also, non-regular patterns of battens, e.g. even and/or non-even, made be used for fastening the first 110 and second 120 fastening portions to the roof structure construction.

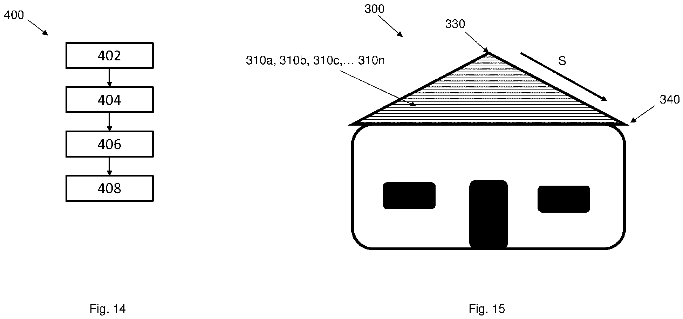

Moreover, many different types of roof tiles for covering roofs are provided on the market. The tiles may have different dimensions and shapes as mentioned and may be produced from many different materials. The roof tiles are often arranged upon a roof structure in a given pattern. The roof structure often comprises battens extending in horizontal lines and being arranged in parallel to each other seen from the ridge of the roof to the eaves or roof projection as shown in Fig. 15. The battens on which the tiles are supported may be arranged on a construction of counter battens which however is not shown in the Figs.

A common type of roof tiles is so called Bieber roof tiles which are shown in Figs. 10a - 10c. A drawback with such roof tiles is that it may be difficult to mount roof equipment on roofs covered by such tiles due to their shape and the laying pattern prescribed for such tiles. Often one or more of such roof tiles will be arranged in a deviated position, e.g. slightly raised position, when mounting roof equipment which means reduced protection of the roof and a risk of tiles detaching from the roof structure, e.g. under windy or stormy conditions.

Therefore, in the invention the first fastening portion 110 has an elongated band shape and the second fastening portion 120 has an elongated band shape, as is for instance shown in the Figs. The bands extend along the surface of the roof 300 in a raised position extending outwards from the surface of the roof 300 which implies a very narrow build in the plane of the roof 300. More specifically, in embodiments of the invention the first fastening portion 110 has a first length extending in a plane parallel to a plane of the roof 300 and a first band width extending outwards from the roof 300, and/or the second fastening portion 120 has a second length extending in a plane parallel to a plane of the roof 300 and a second band width extending outwards from the roof 300. The length is larger than the band width, e.g. more than two times the width. Further, the thickness of the bands is less than the band width of the bands hence the term band used herein.

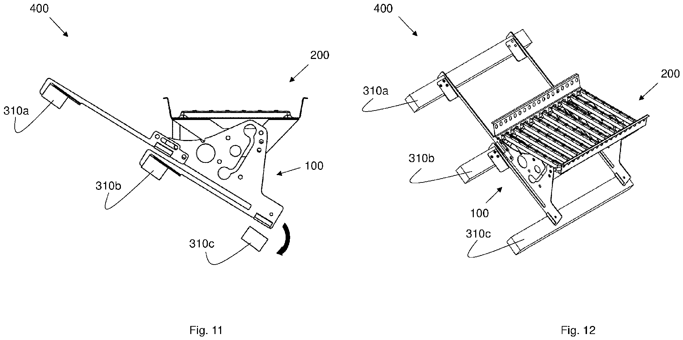

Furthermore, Figs. 11 - 13 show examples of different systems 400 according to aspects of the invention. Such systems 400 comprises at least one fastening arrangement 100 according to embodiments of the invention and at least one roof equipment 200. By coupling any number of brackets 130 and first 110 and second 120 fastening portions as disclosed herein a system 400 can be formed.

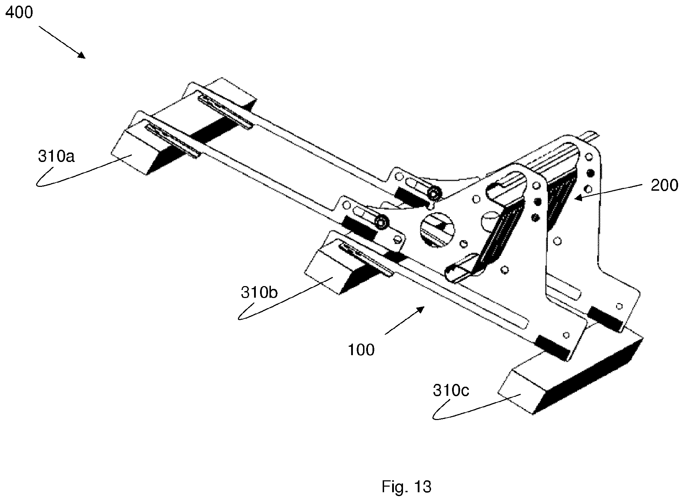

In the disclosed non-limiting example, the roof equipment 200 in Fig. 11 and 12 is a walkway. However, only a section of the walkway is shown. In Fig. 13 the roof equipment 200 is a snow fence. Non-limiting further examples of roof equipment are roof ladders, solar panels, ridge and roof rails, hatches, guardrails, fall protection and other safety devices, snow stoppers, roof steps, etc.

The fastening arrangement 100 may be produced from sheet metal bent in suitable shapes. Hence, one or more sheets may be punched in different shapes and thereafter bent or folded for producing the different parts of the fastening arrangement 100 and the system 400 according to embodiments of the invention.

Figs. 10a - 10c show an embodiment of the present fastening arrangement 100 comprising two attachment means and one second adjustment means 144. A first attachment means 142 is configured to attach the bracket 130 to the first fastening portion 110 and a second attachment means and the second adjustment means are configured to attach the bracket 130 to the second fastening portion 120.

As disclosed in the embodiments illustrated in Figs. 10a - 10c, the first fastening portion 110 extends on a first tile 320a in operation and the second fastening portion 120 extends under the first tile 320a in operation. In such cases the second fastening portion 120 may comprise a U-shaped portion 126 extending around and holding and supporting a lower end of the first tile 320a in operation as shown. The U-shaped portion 126 may be arranged adjacent to the supporting portion 124 and facing the opposite direction to the slope S of the roof 300 in embodiments of the invention. As further disclosed in Figs. 10a - 10c, the first fastening portion 110 extends between a side of a second tile 320b and a side of a third tile 320c in operation, and the second fastening portion 120 extends between a side of a fourth tile 320d and a side of a fifth tile 320e in operation. Further, the second fastening portion 120 extends between a side of a fourth tile 320d and a side of a fifth tile 320e in operation This is possible due to the band shape of the first and second fastening portions.

In Fig. 10a, a second fastening portion 120 is attached to a second batten 310b e.g. by using screws.

In Fig. 10b, a first tile 320a is arranged on and over the second fastening portion 120 and the end of the first tile 320a is fitted into the U-shaped portion 126. A first fastening portion 110 is attached to a first batten 310a by using screws and the first fastening portion 110 extends above the first tile 320a in operation. It is further noted from Fig. 10b that the second fastening portion 120 extends between a side of a fourth tile 320d and a side of a fifth tile 320e in operation.

In Fig. 10c, a bracket 130 is attached to the first fastening portion 110 and the second fastening portion 120, respectively, e.g. by using bolt connections. However, if the second fastening portion 120 and the bracket 130 are formed from a common structure, there is no need to perform any attachment of the second fastening portion 120 and the bracket 130.

The bracket 130 extends outwards from the plane of the roof 300 and comprises engagement means for engagement with corresponding engagement means of a roof equipment 200 (not shown). The bracket 130 may also comprise a supporting portion 136 as shown in Fig. 10c. The supporting portion may be a plate arranged perpendicular to the outwards extension of the bracket 130 and configured to be supported by a tile in operation, e.g. the first tile 320a.

In more general terms, aspects external to the scope of the claimed invention relate to a method for mounting a fastening arrangement 100 at a roof 300. With reference to Figs. 10a - 10c and 14, the method 400 comprises:
fastening 402 a second fastening portion 120 to a second roof structure 310b of a roof 300;
placing 404 a first tile 320a over the second fastening portion 120 so that the second fastening portion 120 extends below the first tile 320a and wherein at least one section of the first tile 320a is supported by supporting means 150 of the fastening arrangement 100;
fastening 406 a first fastening portion 110 to a first roof structure 310a of the roof 300 so that the first fastening portion 110 extends over the first tile 320a; and
attaching 408 a bracket 130 to the first fastening portion 110, wherein the bracket 130 comprises at least one engagement means 132a, 132b,..., 132n for engagement with a roof equipment 200.

The general method may also involve the use of the embodiments of the fastening arrangement herein disclosed. Hence, the method 400 may involve the use of first and second adjustment means, the U-shaped portion, etc.

Finally, it should be understood that the invention is not limited to the embodiments described above, but relates to and incorporates all embodiments within the scope of the appended claims.

## Claims

1. A fastening arrangement (100) for fastening roof equipment (200) to a roof (300), the fastening arrangement (100) comprising:
a bracket (130) comprising at least one engagement means (132a, 132b,..., 132n) for engagement with a roof equipment (200);
a first fastening portion (110) comprising at least one first fastening means (112) for fastening the fastening arrangement (100) to a first roof structure (310a) of a roof (300);
a second fastening portion (120) comprising at least one second fastening means (122) for fastening the fastening arrangement (100) to a second roof structure (310b) of the roof (300);
attachment means (142) for attaching the first fastening portion (110) to the bracket (130) and/or to the second fastening portion (120); and
supporting means (150) for supporting at least one section of a first tile (320a) in operation; and wherein the first fastening portion (110) and the second fastening portion (120) have elongated band shapes, each elongated band, except for their respective first (112) and second fastening means (122), is extending outwards from a plane of the roof (300) perpendicular to the plane of the roof (300) so as to be narrow in the plane of the roof (300), such that the first fastening portion (110) and the second fastening portion (120) are arranged in a raised position along the plane of the roof (300) in operation.

2. The fastening arrangement (100) according to claim 1, wherein the supporting means (150) is configured to enclose and support a lower end of the first tile (320a) in operation.

3. The fastening arrangement (100) according to claim 2, wherein the supporting means (150) is a U-shaped portion (126) of the fastening arrangement (100) extending around and enclosing the lower end of the first tile (320a) in operation.

4. The fastening arrangement (100) according to any one of the preceding claims, further comprising least one first adjustment means (152) for adjusting a length (L1) of the supporting means (150) thereby adjusting the length of the section enclosed and supported by the supporting means (150).

5. The fastening arrangement (100) according to any one of the preceding claims, wherein
the first fastening portion (110) extends at least partially over the first tile (320a) in operation, and
the second fastening portion (120) extends at least partially under the first tile (320a) in operation.

6. The fastening arrangement (100) according to any one of the preceding claims, further comprising at least one second adjustment means (144) for adjusting a length (L2) of the fastening arrangement (100).

7. The fastening arrangement (100) according to claim 6, wherein the second adjustment means (144) comprises adjustment means for adjusting the length (L2) of the fastening arrangement (100) along a direction perpendicular to an extension of the first roof structure (310a) and an extension of the second roof structure (310b).

8. The fastening arrangement (100) according to claim 6 or 7, wherein the attachment means (142) and the second adjustment means (144) are co-located.

9. The fastening arrangement (100) according to claim 8, wherein the attachment means (142) and the second adjustment means (144) together form a combined attachment and adjustment means.

10. The fastening arrangement (100) according to any one of the preceding claims, wherein the bracket (130) and the second fastening portion (120) are formed from a common structure.

11. The fastening arrangement (100) according to any one of the preceding claims, wherein the second fastening portion (120) comprises a supporting portion (124) configured to support the fastening arrangement (100) on a third roof structure (310c) of the roof (300) in operation.

12. The fastening arrangement (100) according to any one of the preceding claims, wherein
the first fastening portion (110) extends between a side of a second tile (320b) and a side of a third tile (320c) in operation, and
the second fastening portion (120) extends between a side of a fourth tile (320d) and a side of a fifth tile (320e) in operation.

## Patentansprüche

1. Befestigungsanordnung (100) zum Befestigen von Dachzubehörteilen (200) an einem Dach (300), wobei die Befestigungsanordnung (100) Folgendes umfasst:
eine Halterung (130), die mindestens ein Eingriffsmittel (132a, 132b,..., 132n) zum Eingriff mit einem Dachzubehörteil (200) umfasst,
einen ersten Befestigungsabschnitt (110), der mindestens ein erstes Befestigungsmittel (112) zum Befestigen der Befestigungsanordnung (100) an einer ersten Dachstruktur (310a) eines Dachs (300) umfasst,
einen zweiten Befestigungsabschnitt (120), der mindestens ein zweites Befestigungsmittel (122) zum Befestigen der Befestigungsanordnung (100) an einer zweiten Dachstruktur (310b) des Dachs (300) umfasst,
Anbringungsmittel (142) zum Anbringen des ersten Befestigungsabschnitts (110) an der Halterung (130) und/oder an dem zweiten Befestigungsabschnitt (120) und Stützmittel (150) zum Stützen mindestens eines Abschnitts eines ersten Dachziegels (320a) im Betrieb, und wobei der erste Befestigungsabschnitt (110) und der zweite Befestigungsabschnitt (120) längliche Bandformen aufweisen, wobei sich jedes längliche Band mit Ausnahme ihres jeweiligen ersten (112) und zweiten Befestigungsmittels (122) von einer Ebene des Dachs (300) senkrecht zu der Ebene des Dachs (300) nach außen erstreckt, so dass es in der Ebene des Dachs (300) schmal ist, so dass der erste Befestigungsabschnitt (110) und der zweite Befestigungsabschnitt (120) im Betrieb in einer angehobenen Position entlang der Ebene des Dachs (300) angeordnet sind.

2. Befestigungsanordnung (100) nach Anspruch 1, wobei das Stützmittel (150) dazu ausgestaltet ist, im Betrieb ein unteres Ende des ersten Dachziegels (320a) zu umschließen und zu stützen.

3. Befestigungsanordnung (100) nach Anspruch 2, wobei das Stützmittel (150) ein U-förmiger Abschnitt (126) der Befestigungsanordnung (100) ist, der sich im Betrieb um das untere Ende des ersten Dachziegels (320a) herum erstreckt und dieses umschließt.

4. Befestigungsanordnung (100) nach einem der vorhergehenden Ansprüche, ferner umfassend mindestens ein erstes Verstellmittel (152) zum Verstellen einer Länge (L1) des Stützmittels (150), wodurch die Länge des von dem Stützmittel (150) umschlossenen und gestützten Abschnitts verstellt wird.

5. Befestigungsanordnung (100) nach einem der vorhergehenden Ansprüche, wobei
sich der erste Befestigungsabschnitt (110) im Betrieb mindestens teilweise über den ersten Dachziegel (320a) erstreckt und
sich der zweite Befestigungsabschnitt (120) im Betrieb mindestens teilweise unter dem ersten Dachziegel (320a) erstreckt.

6. Befestigungsanordnung (100) nach einem der vorhergehenden Ansprüche, ferner umfassend mindestens ein zweites Verstellmittel (144) zum Verstellen einer Länge (L2) der Befestigungsanordnung (100).

7. Befestigungsanordnung (100) nach Anspruch 6, wobei das zweite Verstellmittel (144) Verstellmittel zum Verstellen der Länge (L2) der Befestigungsanordnung (100) entlang einer senkrecht zu einer Erstreckung der ersten Dachstruktur (310a) und einer Erstreckung der zweiten Dachstruktur (310b) verlaufenden Richtung umfasst.

8. Befestigungsanordnung (100) nach Anspruch 6 oder 7, wobei das Anbringungsmittel (142) und das zweite Verstellmittel (144) gemeinsam angeordnet sind.

9. Befestigungsanordnung (100) nach Anspruch 8, wobei das Anbringungsmittel (142) und das zweite Verstellmittel (144) zusammen ein kombiniertes Anbringungs- und Verstellmittel bilden.

10. Befestigungsanordnung (100) nach einem der vorhergehenden Ansprüche, wobei die Halterung (130) und der zweite Befestigungsabschnitt (120) aus einer gemeinsamen Struktur gebildet sind.

11. Befestigungsanordnung (100) nach einem der vorhergehenden Ansprüche, wobei der zweite Befestigungsabschnitt (120) einen Stützabschnitt (124) umfasst, der dazu ausgestaltet ist, die Befestigungsanordnung (100) im Betrieb an einer dritten Dachstruktur (310c) des Dachs (300) zu stützen.

12. Befestigungsanordnung (100) nach einem der vorhergehenden Ansprüche, wobei
sich der erste Befestigungsabschnitt (110) im Betrieb zwischen einer Seite eines zweiten Dachziegels (320b) und einer Seite eines dritten Dachziegels (320c) erstreckt und
sich der zweite Befestigungsabschnitt (120) im Betrieb zwischen einer Seite eines vierten Dachziegels (320d) und einer Seite eines fünften Dachziegels (320e) erstreckt.

## Revendications

1. Dispositif de fixation (100) pour fixer un équipement de toit (200) à un toit (300), le dispositif de fixation (100) comprenant :
un support (130) comprenant au moins un moyen de mise en prise (132a, 132b, ..., 132n) destiné à entrer en prise avec un équipement de toit (200) ;
une première partie de fixation (110) comprenant au moins un premier moyen de fixation (112) pour fixer le dispositif de fixation (100) à une première structure de toit (310a) d'un toit (300) ;
une seconde partie de fixation (120) comprenant au moins un second moyen de fixation (122) pour fixer le dispositif de fixation (100) à une deuxième structure de toit (310b) du toit (300) ;
un moyen d'attache (142) pour attacher la première partie de fixation (110) au support (130) et/ou à la seconde partie de fixation (120) ; et
un moyen de support (150) pour supporter au moins une section d'une première tuile (320a) durant l'utilisation ; et dans lequel la première partie de fixation (110) et la seconde partie de fixation (120) ont des formes de bande allongée, chaque bande allongée, à l'exception de leurs premier (112) et second (122) moyens de fixation respectifs, s'étendant vers l'extérieur à partir d'un plan du toit (300) perpendiculairement au plan du toit (300) de manière à être étroite dans le plan du toit (300), de sorte que la première partie de fixation (110) et la seconde partie de fixation (120) soient disposées en saillie le long du plan du toit (300) durant l'utilisation.

2. Dispositif de fixation (100) selon la revendication 1, dans lequel le moyen de support (150) est configuré pour recevoir et supporter une extrémité inférieure de la première tuile (320a) durant l'utilisation.

3. Dispositif de fixation (100) selon la revendication 2, dans lequel le moyen de support (150) est une partie en forme de U (126) du dispositif de fixation (100) s'étendant autour de l'extrémité inférieure de la première tuile (320a) et la recevant durant l'utilisation.

4. Dispositif de fixation (100) selon l'une quelconque des revendications précédentes, comprenant en outre au moins un premier moyen de réglage (152) pour régler une longueur (L1) du moyen de support (150), de façon à régler ainsi la longueur de la section reçue et supportée par le moyen de support (150).

5. Dispositif de fixation (100) selon l'une quelconque des revendications précédentes, dans lequel
la première partie de fixation (110) s'étend au moins partiellement sur la première tuile (320a) durant l'utilisation, et
la seconde partie de fixation (120) s'étend au moins partiellement sous la première tuile (320a) durant l'utilisation.

6. Dispositif de fixation (100) selon l'une quelconque des revendications précédentes, comprenant en outre au moins un second moyen de réglage (144) pour régler une longueur (L2) du dispositif de fixation (100).

7. Dispositif de fixation (100) selon la revendication 6, dans lequel le second moyen de réglage (144) comprend un moyen de réglage pour régler la longueur (L2) du dispositif de fixation (100) le long d'une direction perpendiculaire à une extension de la première structure de toit (310a) et à une extension de la seconde structure de toit (310b).

8. Dispositif de fixation (100) selon la revendication 6 ou 7, dans lequel le moyen d'attache (142) et le second moyen de réglage (144) sont situés au même endroit.

9. Dispositif de fixation (100) selon la revendication 8, dans lequel le moyen d'attache (142) et le second moyen de réglage (144) forment ensemble un moyen d'attache et de réglage combiné.

10. Dispositif de fixation (100) selon l'une quelconque des revendications précédentes, dans lequel le support (130) et la seconde partie de fixation (120) sont formés à partir d'une structure commune.

11. Dispositif de fixation (100) selon l'une quelconque des revendications précédentes, dans lequel la seconde partie de fixation (120) comprend une partie de support (124) configurée pour supporter le dispositif de fixation (100) sur une troisième structure de toit (310c) du toit (300) durant l'utilisation.

12. Dispositif de fixation (100) selon l'une quelconque des revendications précédentes, dans lequel
la première partie de fixation (110) s'étend entre un côté d'une deuxième tuile (320b) et un côté d'une troisième tuile (320c) durant l'utilisation, et
la seconde partie de fixation (120) s'étend entre un côté d'une quatrième tuile (320d) et un côté d'une cinquième tuile (320e) durant l'utilisation.
